# EUROPÄISCHE PATENTANMELDUNG

(11) **EP 2 163 800 A2**
(43) Veröffentlichungstag der Anmeldung: **17.03.2010**
(21) Anmeldenummer: 09075390.6
(22) Anmeldetag: 24.08.2009
(51) Int. Cl.: F16L 13/02, F16L 58/18

(54) **Nachumhüllung des Verbindungsbereichs von mit Zementmörtel umhüllten Stahlrohrleitungen sowie eine derart nachumhüllte Stahlrohrleitung**

(30) Priorität: 15.09.2008 DE 102008047662
(71) Anmelder: Salzgitter Mannesmann Line Pipe Gmbh, 57074 Siegen (DE)
(72) Erfinder: Kocks, Hans-Jürgen, Dr., 57258 Freudenberg (DE); Winkels, Jörn, 59457 Werl (DE)
(74) Vertreter: Meissner, Peter E.

(57) **Zusammenfassung**

1. Nachumhüllung des Verbindungsbereiches von mit Zementmörtel (2,2') ummantelten Rohren (1,1'), sowie mit Zementmörtel ummantelte Rohrleitung

2.1. Die Erfindung betrifft ein Verfahren zur Nachumhüllung des Verbindungsbereiches von mit Zementmörtel ummantelten Rohren (1,1'), insbesondere von Stahlrohren, die im Verbindungsbereich der Rohre von der Ummantelung befreit sind und zu einer Rohrleitung verschweißt werden und nach der Verschweißung in diesem Bereich mit einer Nachumhüllung (5) versehen werden.

2.2. Dabei wird mittels einer auf den Enden der Zementmörtelummantelung spaltfrei aufgelegten und dort fixierten und mit einer zum Eingießen des Nachumhüllungsmaterials geeigneten schlitzförmigen Öffnung versehenen Verschalung ein auf Harzbasis bestehendes Vergussmaterial zur Vervollständigung der Ummantelung und bezogen auf die Endabschnitte der Zementmörtelummantelung ansatzfrei vergossen.

## Beschreibung

Die Erfindung betrifft eine Nachumhüllung des Verbindungsbereiches von mit Zementmörtel umhüllten Stahlrohrleitungen gemäß dem Oberbegriff des Patentanspruches 1 sowie eine derart nachumhüllte Stahlrohrleitung nach Patentanspruch 7. Vorteilhafte Weiterbildungen sind in den jeweiligen Unteransprüchen offenbart.

Ummantelungen von Rohrleitungen mit einem zusätzlichen Schutz aus Zementmörtel sind z. B. aus der DE 35 12 528 C2 bekannt.

Solche Rohrleitungen werden u. a. für Trink- und Abwasser sowie für den Transport brennbarer Flüssigkeiten und Gase eingesetzt. Sie sind meist mit einer dreischichtigen Kunststoffbeschichtung gegen Korrosion und beispielsweise bei erd- oder seeverlegten Rohrleitungen zusätzlich durch eine Zementmörtel-Ummantelung gegen mechanische Beschädigungen geschützt. Zur Armierung des Zementmörtels wird dieser bedarfsweise zusätzlich mit Fasern oder Fasergewebe versetzt.

In der betrieblichen Fertigung werden die einzelnen mit Kunststoff beschichteten und mit Zementmörtel ummantelten Rohre im Endbereich, dort wo später die Rohre Stoß an Stoß auf der Baustelle zu einer Rohrleitung zusammengeschweißt werden, von der Beschichtung bzw. Ummantelung freigehalten.

Nach dem Zusammenschweißen der Rohre müssen die von der Beschichtung bzw. Ummantelung freigehaltenen Verbindungsbereiche zur Erfüllung der Anforderungen an den Korrosionsschutz sowie gegen mechanische Beschädigungen mit einer entsprechenden Nachumhüllung versehen werden.

Das standardmäßig eingesetzte Nachumhüllungsmaterial für mit Zementmörtel ummantelte Rohre ist Gießmörtel.

Zur Vervollständigung der Ummantelung wird der Mörtel auf der Baustelle im Verbindungsbereich nach Aufbringung des Korrosionsschutzes in eine auf den Enden der Zementmörtelummantelung aufliegende Pappverschalung, die beispielsweise durch ein Klebeband fixiert ist, vergossen (Sonderdruck 006 der Salzgitter Mannesmann Line Pipe GmbH 6/2000).

Das Nachumhüllungsmaterial sollte im Idealfall etwa gleiche mechanische Eigenschaften aufweisen wie die Ummantelung selbst, da nicht wie im Fall des Korrosionsschutzes eine Barrierewirkung für Wasser und Sauerstoff sondern ein mechanischer Schutz gewährleistet werden soll. Diese Festigkeit erreicht ein Zementmörtel je nach Witterung selbst im günstigsten Fall erst nach mehreren Tagen.

Im Baustellenalltag wird üblicherweise eine Wartezeit von 3 h und für die Handhabung unter gehobenen mechanischen Beanspruchungen, wie im Falle der grabenlosen Verlegung, eine Wartezeit von 24 Stunden empfohlen.

Die nach diesen Wartezeiten erreichten mechanischen Festigkeiten stellen zwangsläufig einen Kompromiss zwischen Wartezeit und erforderlichem Aushärtegrad dar.

Trotzdem verzögern diese Kompromisslösungen den Baufortschritt und bieten immer wieder Angriffsfläche für mechanische Beschädigungen, da der Gießmörtel aufgrund seiner Sprödigkeit im Falle auftretender punktförmiger und schlagartiger Belastungen sehr empfindlich reagiert.

Aus der DE 200 00 514 U1 sind für nur mit Kunststoff (PE oder PP) beschichtete Rohre grundsätzlich auch Nachumhüllungen aus Kunststoff bekannt. Das hier verwendete duromere Material besteht aus mit Epoxidharz getränkten Glasfasermatten, die in aufwändiger Umwicklungstechnik an den Verbindungsstellen der Rohrleitung aufgebracht werden.

Nachteilig ist hierbei weiterhin, dass die Nachumhüllung überlappend mit der bestehenden Umhüllung ausgeführt wird und z. B. im Fall einer grabenlosen Verlegung ebenfalls eine Angriffsfläche für mechanische Beschädigungen darstellt.

Aufgabe der Erfindung ist es, ein Verfahren zur Nachumhüllung des Verbindungsbereiches von mit Zementmörtel ummantelten Rohren, insbesondere von Stahlrohren anzugeben, welches einerseits baustellenseitig einfach zu handhaben ist und den Nachteil einer zusätzlichen Angriffsfläche für mechanische Beschädigungen des Nachumhüllungsmaterials vermeidet.

Des Weiteren soll ein Nachumhüllungsmaterial bereitgestellt werden, das eine schnelle Aushärtung gewährleistet und den Anforderungen an die mechanische Belastbarkeit auch bei punktförmigen bzw. schlagartigen Belastungen genügt.

Zusätzlich soll eine entsprechend nachumhüllte Rohrleitung bereitgestellt werden.

Erfindungsgemäß wird diese Aufgabe dadurch gelöst, dass mittels einer auf den Enden der Zementmörtelummantelung spaltfrei aufgelegten und dort fixierten Verschalung ein Vergussmaterial auf Harzbasis zur Vervollständigung der Ummantelung und bezogen auf die Endabschnitte der Zementmörtelummantelung ansatzfrei vergossen wird.

Der Vorteil des erfindungsgemäßen Verfahrens zur Nachumhüllung des Verbindungsbereiches von mit Zementmörtel ummantelten Leitungsrohren ist darin zu sehen, dass unter Anwendung von Gießharz als Vergussmaterial deutlich kürzere Aushärtezeiten als beim Gießmörtel realisiert werden, was zu einem erheblichen Kostenvorteil wegen des jetzt schnelleren Baufortschritts führt.

Als besonders vorteilhaft hat sich der Einsatz von Polyurethanharz als Vergussmasse bewährt.

Je nach verwendetem Gießharz kann dieses darüber hinaus möglicherweise auch die Aufgabe des Korrosionsschutzes übernehmen und den Einsatz eines Nachumhüllungsmaterials einsparen.

Im Vergleich zur bekannten Umhüllung mittels Wickeltechnik von mit Epoxydharz getränkten Glasfasermatten wird bei dem erfindungsgemäßen Verfahren das Polyurethanharz nur über eine Verschalung vergossen und ist damit deutlich einfacher in der Handhabung und Verarbeitung.

Zusätzlich ist die mechanische Beanspruchbarkeit auch bei punktförmig oder schlagartig auftretenden Belastungen durch das zähelastische Verhalten des Polyurethanharzmaterials gegenüber dem standardmäßig eingesetzten Gießmörtel deutlich verbessert.

Gegenüber der aus der DE 200 00 514 U1 bekannten Nachumhüllung wird darüber hinaus ein ansatzfreier Übergang zur Zementmörtelummantelung realisiert, so dass Beschädigungen der Nachumhüllung, z. B. bei der grabenlosen Verlegung der Rohrleitungen, vermieden werden.

In umfangreichen Versuchen konnte nachgewiesen werden, dass auch im Vergleich zu anderen zur Nachumhüllung von mit Zementmörtel ummantelten Rohren grundsätzlich geeigneten Kunststoffmaterialien, wie z. B. Acrylharz, das erfindungsgemäße Nachumhüllungsmaterial deutlich einfacher zu handhaben ist und geruchärmer zu verarbeiten ist. Die Nachumhüllung des Verbindungsbereiches mit dem Polyurethanharzmaterial ist dabei auf ebenso einfache Weise durchzuführen wie die Nachumhüllung mit dem bekannten Gießmörtel.

In Versuchen wurde eine erfindungsgemäß nachumhüllte Rohrleitung nach 24 h und nach 28 Tagen im Hinblick auf die nach dem DVGW-Arbeitsblatt geforderte Schlagbeständigkeit überprüft. Die dort geforderten 150N wurde in allen Fällen übertroffen.

In einer vorteilhaften Ausgestaltung der Erfindung werden dem Polyurethanharzmaterial zur Steigerung der mechanischen Belastbarkeit Feststoffe hinzugegeben. Unter Feststoffen werden in diesem Zusammenhang beispielsweise Kohle- oder Glasfasern oder auch Sand verstanden.

Bei der Verwendung von Sand kann die Körnung je nach Anforderungen zwischen 0,5 und 3,0 mm betragen, wobei Körnung und Volumenanteil so einzustellen sind, dass die Gießfähigkeit des Vergussmaterials erhalten bleibt und das Sandkorn vollständig vom Vergussmaterial umschlossen ist.

Anhand einer Figur wird die Erfindung nachfolgend näher erläutert.

Ein Stahlrohr 1 und ein weiteres Stahlrohr 1' sind mit einer Zementmörtelummantelung 2 bzw. 2' sowie mit einer zwischen Stahlrohr 1, 1' und Zementmörtelummantelung 2, 2' liegenden Kunststoffumhüllung 3, 3' versehen.

Um eine Verbindungsschweißung von Stahlrohr 1 und Stahlrohr 1' realisieren zu können sind diese im Endbereich sowohl von der Kunststoffumhüllung 3, 3' als auch von der Zementmörtelummantelung 2, 2' freigehalten. Die Stahlrohre 1, 1' sind stirnseitig mit einer Schweißnaht 4 fluiddicht verbunden.

Der von der Zementmörtelummantelung 2, 2' freigehaltene Verbindungsbereich der Stahlrohre 1, 1' ist erfindungsgemäß mit einem Polyurethanharzmaterial als Nachumhüllung 5 versehen, das zur Steigerung der mechanischen Belastbarkeit mit Sand 6 versetzt ist.

Nicht dargestellt ist in dieser Figur das baustellenseitige Aufbringen der Nachumhüllung 5 über eine auf den Enden der Zementmörtelummantelung spaltfrei aufgelegte und dort fixierte Verschalung, die um den Stoßbereich der Rohre 1, 1' gelegt und mit einer zum Eingießen des Polyurethanharzmaterials geeigneten schlitzförmigen Öffnung versehen ist.

Als Material für die Schalung kann beispielsweise Pappe, Kunststoff oder Blech verwendet werden.

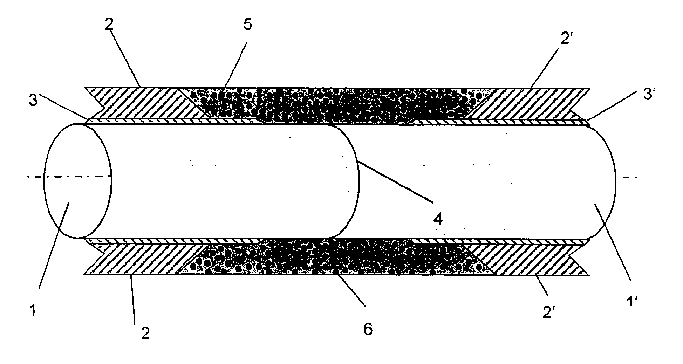

Das spaltfreie Auflegen und Fixieren der Verschalung auf der Zementmörtelummantelung ist wichtig um wie in der Figur dargestellt eine ansatzfreie Anbindung der Nachumhüllung an die Zementmörtelummantelung zu realisieren.

**Bezugszeichenliste**

| **Nr.** | **Bezeichnung** |
|---|---|
| 1, 1' | Stahlrohr |
| 2, 2' | Zementmörtelummantelung |
| 3, 3' | Kunststoffumhüllung |
| 4 | Verbindungsschweißung |
| 5 | Nachumhüllung |
| 6 | Sand |

## Patentansprüche

1. Verfahren zur Nachumhüllung des Verbindungsbereiches von mit Zementmörtel ummantelten Rohren, insbesondere von Stahlrohren, die im Verbindungsbereich der Rohre von der Ummantelung befreit sind und zu einer Rohrleitung verschweißt werden und nach der Verschweißung in diesem Bereich mit einer Nachumhüllung versehen werden, wobei mittels einer auf den Enden der Zementmörtelummantelung spaltfrei aufgelegten und dort fixierten und mit einer zum Eingießen des Nachumhüllungsmaterials geeigneten schlitzförmigen Öffnung versehenen Verschalung ein auf Harzbasis bestehendes Vergussmaterial zur Vervollständigung der Ummantelung und bezogen auf die Endabschnitte der Zementmörtelummantelung ansatzfrei vergossen wird.

2. Verfahren nach Anspruch 1
**dadurch gekennzeichnet,**
**dass** als Vergussmaterial Polyurethan verwendet wird.

3. Verfahren nach Anspruch 1 oder 2
**dadurch gekennzeichnet,**
**dass** dem Vergussmaterial Feststoffe zugesetzt werden

4. Verfahren nach Anspruch 3
**dadurch gekennzeichnet,**
**dass** der zugesetzte Feststoff Sand ist.

5. Verfahren nach Anspruch 4
**dadurch gekennzeichnet,**
**dass** der Sand eine Körnung von 0,5 - 3,0 mm aufweist.

6. Verfahren nach Anspruch 4 und 5
**dadurch gekennzeichnet,**
**dass** die Körnung des Sandes und der Volumenanteil in der Vergussmasse so eingestellt werden, dass die Vergießfähigkeit des Vergussmaterials erhalten bleibt und das Sandkorn vollständig vom Vergussmaterial umschlossen ist.

7. Mit Zementmörtel ummantelte Rohrleitung, insbesondere aus Stahl, bestehend aus miteinander verschweißten Einzelrohren, deren zu verschweißende Endbereiche zuvor von der Ummantelung befreit und zu einer Rohrleitung verschweißt werden und anschließend mit einer Nachumhüllung in dem von der Ummantelung freigehaltenen Bereich versehen werden, hergestellt gemäß mindestens einem der Ansprüche 1 - 6.
